# EUROPEAN PATENT APPLICATION

(11) **EP 3 203 347 A1**
(43) Date of publication of application: **09.08.2017**
(21) Application number: 16153763.4
(22) Date of filing: 02.02.2016
(51) Int. Cl.: G05D 7/06, F16K 1/52

(54) **VALVE, IN PARTICULAR HEAT EXCHANGER VALVE**

(71) Applicant: Danfoss A/S, 6430 Nordborg (DK)
(72) Inventor: Sigurdsson, Haraldur, 8240 Risskov (DK); Hølck, Poul, 8300 Odder (DK)
(74) Representative: Knoblauch, Andreas

(57) **Abstract**

A valve (1) in particular a heat exchanger valve, is described comprising a housing having a first port (3), a second port (4), and a flow path between said first port (3) and said second port (4), wherein a valve element (7), a valve seat (6) having an axis (23), and a dynamic unit (8) are arranged in said flow path.

Such a valve should have a low noise generation.

To this end said dynamic unit (8) comprises at least a first bleed (15) having a variable first throttling resistance and a second bleed (16) having a variable second throttling resistance, said first bleed (15) and said second bleed (16) being arranged in series.

## Description

The present invention relates to a valve, in particular a heat exchanger valve, comprising a housing having a first port, a second port, and a flow path between said first port and said second port, wherein a valve element, a valve seat having an axis, and a dynamic unit are arranged in said flow path.

The present invention is illustrated with help of a radiator valve as example for a valve, in particular as example for a heat exchanger valve. However, the invention is applicable with other valves as well.

The dynamic unit is a kind of maximum flow limiter which secures a maximum flow over the valve and this maximum flow is inlet pressure independent. To this end an inlet pressure is trying to close the dynamic unit against a spring and the pressure working between the dynamic unit and the main valve formed by the valve element and the valve seat is trying to open the dynamic unit. "Closing" and "opening" of the dynamic unit means that the dynamic unit more or less throttles the flow.

The dynamic unit forms throttling means. A disadvantage of such throttling means is a production of noise. Furthermore, a precise control behavior of the dynamic unit usually requires a rather precise production of the parts forming the dynamic unit making such a dynamic unit expensive.

The object underlying the invention is to give the possibility to have bigger production tolerances.

This object is solved with a valve as described at the outset in that said dynamic unit comprises at least a first bleed having a variable first throttling resistance and a second bleed having a variable second throttling resistance, said first bleed and said second bleed being arranged in series.

The total throttling resistance or flow resistance of two (or more) bleeds connected in series corresponds to the sum of the throttling resistances of the two (or more) bleeds. It is therefore possible to choose bleeds each having a lower flow resistance, wherein a lower flow resistance allows for a larger through flow area. The larger this area is, the lower is the noise. More throttles or bleeds in series gives the possibility to have bigger production tolerances.

Preferably said first bleed is formed by a first member and a second member, said first member and said second member being movable relative to each other to change a throttling resistance of said first bleed, wherein said second bleed is formed by said first member and said second member. Both bleeds are formed by the same elements, namely the first member and the second member. When the first member and the second member are moved relatively to each other, the flow resistances of the two bleeds are changed simultaneously. The use of the same part is a rather simple construction.

Preferably said first member is a first tubular member and said second member is a second tubular member, wherein one of said first member and said second member is at least partly inserted into the other one of said first member and said second member to form an inner member and an outer member. Both members are in form of tubes which are telescoped one into the other.

In a preferred embodiment a throttling resistance of said first bleed and a throttling resistance of said second bleed are changed by moving said first member and said second member relatively to each other parallel to said axis. Such a change of the throttling resistance can easily be achieved by using the pressure at the inlet of the valve. The pressure can be used to cause a linear movement of the two members relative to each other.

Preferably said first bleed has a flow path direction from an outside to a chamber surrounded by said first member and said second member and said second bleed has a flow path direction from said chamber to the outside. The flow through the dynamic unit arrives at the outside of the two members, enters the chamber and leaves again to the outside. This has the additional advantage that two changes of direction of the flow are necessary. Each change of direction of flow leads to an increase of flow resistance.

In a preferred embodiment said first bleed is formed by a first control edge of a first circumferential wall of said outer member and a first opening in a second circumferential wall of said inner member. The first circumferential wall covers more or less the first opening so that the first opening has an effective area. This effective area is limited by the control edge. The position of the control edge therefore determines the flow resistance or throttling resistance of the first bleed.

It is preferred as well that said second bleed is formed by a second opening in said first circumferential wall and a second control edge of said inner member. The second control edge is a border of the second circumferential wall. The second circumferential wall covers more or less the second opening to form a second effective area of the opening. The position of the second control edge determines the throttling resistance or flow resistance of the second bleed. It is to be stated that both control edges can be part of a border of a window.

Preferably said second opening has a width in circumferential direction changing along said axis. In this case the effective area of the second opening does not change linearly with the displacement of the first member relative to the second member. Other relations can be used.

In a preferred embodiment spring means act on said first member and/or said second member in a direction in which said first throttling resistance and said second throttling resistance is decreased. The spring means move the first member and the second member relatively to each other in a starting position when no pressure at the inlet of the valve is available.

Preferably said spring means comprises a first spring acting on one side of the second member and a second spring acting on a second side of the second member opposite said first side. The use of two springs allow for a very fine adjustment possibility of the spring means.

In a preferred embodiment said spring means comprises a tension spring. A tension spring generates forces which draw the member on which the tension spring acts. This makes it possible to arrange the spring outside the chamber limited by the first member and the second member.

Preferably a presetting of said first bleed and/or said second bleed is adjustable by rotating said first member and said second member relatively to each other. Such a presetting can be used to change the flow resistance curve or flow resistance characteristic of the dynamic unit. Furthermore, it can be used to change the initial flow resistance and the final flow resistance, in other words to limit the maximum flow through the dynamic unit.

In a preferred embodiment a presetting of said second bleed is kept unchanged when said presetting of said first bleed is adjusted. This makes presetting simpler since only one variable has to be observed.

Preferably said first member comprises an outer thread and said housing comprising an inner thread, wherein said inner thread is in engagement with said outer thread. When the first member is rotated in said housing, it changes its axial position. Such a displacement in axial position changes the initial and the final size of at least the first bleed, in most cases, however, of both bleeds. Since the thread form a sort of gear having a very low transmission ratio, adjustment of the position of the first member in the housing can be performed with very high accuracy.

In a preferred embodiment said bleeds are arranged in series in a direction parallel to said axis. The total flow through the dynamic unit basically is parallel to said axis.

Preferred embodiments of the invention will know be described in more detail with reference to the drawing, wherein:
- Fig. 1: shows a sectional view of a first embodiment of the invention,
- Fig. 2: shows an enlarged view of detail II of Fig. 1,
- Fig. 3: shows a sectional view of a second embodiment of the invention,
- Fig. 4: shows an enlarged view of detail IV of Fig. 3,
- Fig. 5: shows a sectional view of third embodiment of the invention,
- Fig. 6: shows an enlarged view of detail VI of Fig. 5,
- Fig. 7: shows a dynamic unit from the side,
- Fig. 8: shows the dynamic unit according to Fig. 7 from another side,
- Fig. 9: shows a sectional view IX-IX according to Fig. 8, and
- Fig. 10: shows a sectional view X-X according to Fig. 7.

In all fig. the same elements are designated with the same reference numerals.

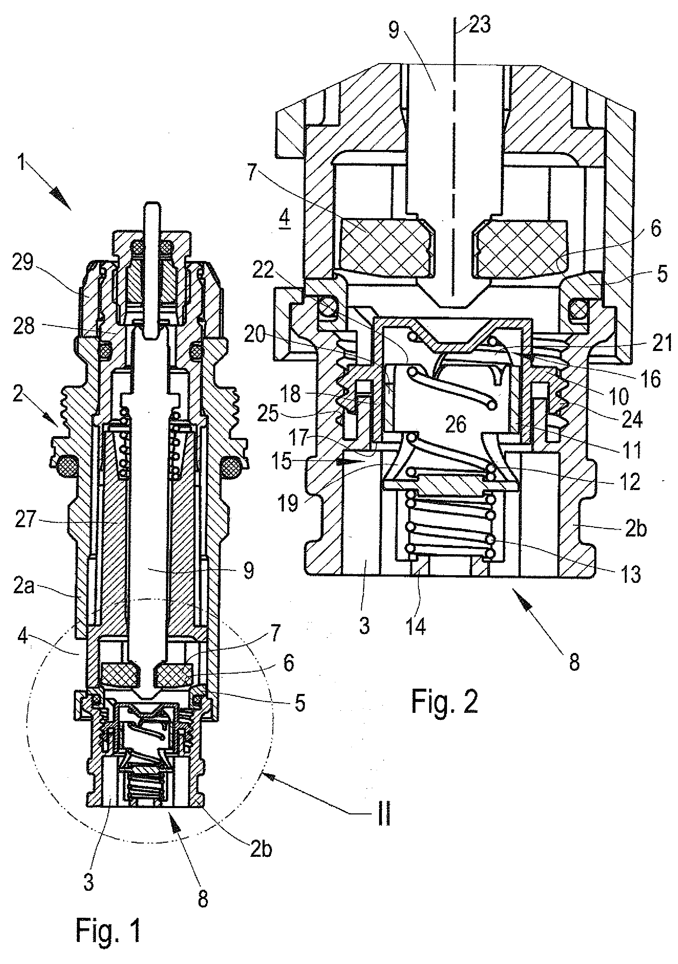

Fig. 1 shows a valve 1 having a housing 2. Housing 2 comprises an upper part 2a and a lower part 2b. The housing 2 comprises a first port 3 and a second port 4. A flow path is arranged between the first port 3 and the second port 4. A valve seat member 5 comprising a valve seat 6, a valve element 7 and a dynamic unit 8 are arranged in the flow path between the first port 3 and the second port 4.

The valve element 7 is connected to a stem 9 as it is known in the art. The valve element 7 can be moved away from and towards the valve seat 6. The distance between the valve element 7 and the valve seat 6 should determine the flow of fluid through the valve 1.

Fig. 2 shows the dynamic unit 8 in more detail.

The dynamic unit 8 comprises a first member 10 and a second member 11. First member 10 is of tubular form. Second member 11 is of tubular form as well. The second member 11 is telescoped within first member 10.

A first spring 12 acts on a first side of the second member 11 and a second spring 13 acts on a second side of the second member 11 opposite said first side. First spring 12 is located between first member 10 and second member 11. Second spring 13 is located between second member 11 and a stop 14 in said lower housing part 2b.

A first bleed 15 is formed by first member 10 and second member 11 and a second bleed 16 is formed by the same two parts, i. e. first member 10 and second member 11.

First bleed 15 is formed between a first control edge 17 of a first circumferential wall 18 of first member 10 and a first opening 19 in a second circumferential wall 20 of said second member 11. In this embodiment first member 10 forms an outer member and second member 11 forms an inner member of said pair of two members 10, 11.

The second bleed 16 is formed by a second opening 21 in said first circumferential wall 18 and a second control edge 22 which is arranged at an axial end of the second circumferential wall 20 of second member 11.

It can be seen that the second opening 21 has a width in circumferential direction which changes along an axis 23. Axis 23 is a center axis of valve seat 6. In the present embodiment second opening 21 has basically the form of a semi-circle.

First member 10 comprises an outer thread 24 and housing 2b comprises an inner thread 25. The outer thread 24 is in engagement with the inner thread 25. Frist member 10 is rotatably arranged within said housing part 2b. When the first member is rotated, it is at the same time displaced axially, i. e. parallel to axis 23.

Such a displacement can be adjusted with a very high accuracy since the gear formed by the two threads 24, 25 has a very low transmission ratio. When the inner member 10 is rotated by 360°, the displacement of the first member 10 is only in the magnitude of one or very few millimeters.

When the first member 10 is displaced, the overlapping between the first circumferential wall 18 and first opening 19 is changed and at the same time the overlapping between the second circumferential wall 20 and the second opening 21 is changed as well. The displacement changes the initial effective area of the first opening 19 and of the second opening 21 and it changes furthermore the effective area of these two openings 19, 21 at each pressure condition.

Fig. 2 shows the situation when there is flow through the dynamic unit 8. When a flow of fluid through the dynamic unit occurs, a pressure at the first port 3 which serves as an inlet in the present embodiment acts on the second member 11. The flow has to pass the first opening 19 which is partly covered by the first circumferential wall 18. This flow causes a pressure drop so that a pressure in a chamber 26 which is surrounded by the two members 10, 11 is lower than the pressure at the first port 3. The pressure difference between the first port 3 and the chamber 26 produces a force which moves the second member 11 in a direction towards the valve seat member 5. Such a movement changes the compression state of the two springs 12, 13 and the second member 11 is moved until the resulting force of the two springs 12, 13 is again in equilibrium with the force generated by the pressure difference between the first port 3 and the chamber 26.

A further pressure drop occurs at the second bleed 21, i. e. when the fluid passes the second opening 21. The pressure drop in the second bleed increases as well when the second member 11 is moved further into the first member 10.

When the first member 10 is displaced parallel to axis 23 by rotating it around axis 23 the initial effective area of first opening 19 is changed and thereby the pressure drop for a given flow is changed as well. This makes it possible to change the presetting of the dynamic unit 8.

The first member 10 can be rotated by means not shown. In one embodiment it is possible to use the valve seat member 5 to rotate the first member 10. To this end first member 10 is rotatably fixed but axially movable connected to valve seat member 5. Valve seat member 5 can be driven by means of a valve insert 27 which can be connected by a connecting element 28 to a ring 29 at the top of valve 1 which ring 29 is accessible from the outside.

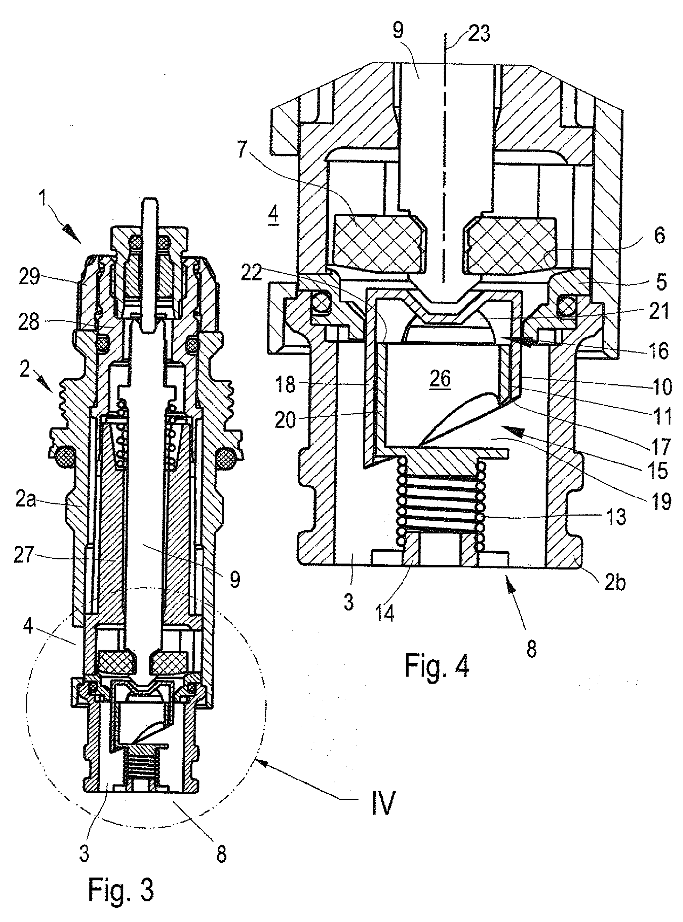

Fig. 3 and 4 show a second embodiment of a valve according to the invention.

Same parts are designated with the same reference numerals.

In this embodiment first member 10 comprises a first control edge 17 of the first circumferential wall 18 which does not run in a plane perpendicular to axis 23 but in a plane which is slanted with respect to axis 23. In other words, first control edge 17 has the form of an ellipse.

First opening 19 in second member 11 has a form of a semi-circle, a form similar to semi-circle, or a form of a half-ellipse.

When first member 10 is rotated relatively to second member 11 the initial effective area of opening 19 is changed in Fig. 4 is shown the maximum size of the effective area of first opening 19. When the first member 10 is rotated by 180° around axis 23 the effective area of first opening 19 is minimized.

The second control edge 22 of the second circumferential wall 20 of second member 11 is arranged in a plane which is perpendicular to axis 23. The position of control edge 22 relative to second opening 21 is not changed when first member 10 is rotated relatively to second member 11. Therefore, when first member 10 is rotated relatively to second member 11 the presetting is only changed with respect to the first bleed 15 and not with respect to the second bleed 16.

As can be seen in Fig. 4, there is only one spring 13 present. Spring 13 is a tension spring. When second member 11 is moved towards valve seat member 5 the tension spring 13 is lengthened and produces restoring forces drawing back the second member 11 in a direction towards stop 14.

The function of this dynamic unit 8 is the same as in Fig. 1 and 2.

A pressure at the first port 3 acts on the second member 11 in a direction towards valve seat member 5. Flow passing first opening 19 produces a pressure drop so that the pressure in chamber 26 is lower than the pressure at the first port 3. The pressure difference between the first port 3 and the chamber 26 generates a force displacing the second member 11 in a direction towards valve seat member 5. This displacement increases the length of spring 13 which in turn generates a force drawing the second member 11 back in a direction towards stop 14. The second member assumes a position in which the force generated by the pressure difference between the first port 3 and chamber 26 is in equilibrium with the drawing force generated by spring 13.

As in the embodiment shown in Fig. 1 and 2 the flow has to leave the chamber 26 through second opening 21, i. e. from the radially inner side to the radially outer side. Again, two changes of direction are necessary for the flow. In Fig. 3 and 4 the first member 10 is axially fixed in housing part 2b. Second member 11 is movable against the force of spring 12 in a direction towards valve seat member 15.

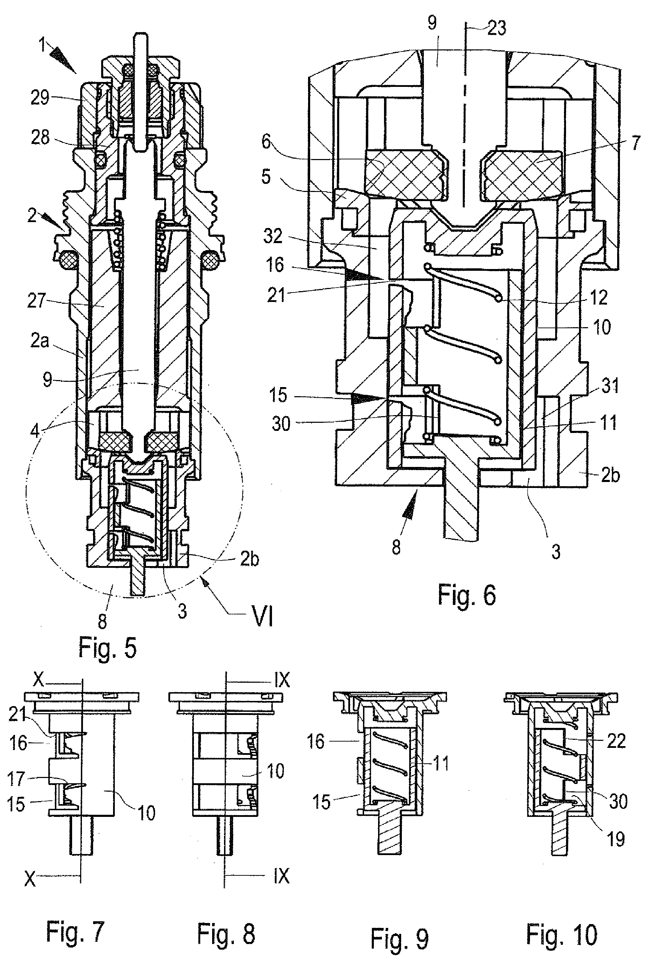

Fig. 5 to 10 shows a third embodiment in which the same elements are designated with the same numerals.

Again the second member 11 of tubular form is arranged within first member 10 which is of tubular form as well.

The first bleed 15 is formed by first control edge 17 and first opening 19 and the second bleed 16 is formed by second opening 21 and second control edge 22.

In this case first control edge 17 and second control edge 22 form the borders of window which windows overlap more or less with openings 19, 21.

These windows have a width in circumferential direction changing along axis 23 and control edge 22 in a circumferential wall 20 runs parallel to axis 23. When the first member 10 is rotated relatively to second member 11 the position of the second control edge 22 and the axial border 30 of first opening 19 is changed and therefore the initial effective area of the two bleeds 15, 16 is changed as well. During operation second member 11 is moved parallel to axis 23 with respect to first member 10 and changes thereby the axial overlapping between opening 19, 21 and the corresponding windows, respectively.

The first port 3 is connected to a ring channel 31. The ring channel 31 is in overlapping relation with the window limited by the first control edge 17. In the same way the second opening 21 is in overlapping relation with a ring channel 32 leading the flow to the valve seat 6.

In all cases shown there are two bleeds 15, 16 connected in series. The flow through the dynamic unit 8 has to pass the first bleed 15 from the radially outside to the radially inside and the second bleed 16 from the radially inside to the radially outside. It is therefore possible to keep the effective flow areas of both bleeds 15, 16 as large as possible and to avoid undesired noise and at the same time the parts of the dynamic unit 8 can be produced with bigger tolerances.

The dynamic unit 8 forms a sort of maximum flow limiter which secures a maximum flow through the valve 1 and this maximum flow is inlet pressure independent. In the dynamic unit 8 the inlet pressure working against the force of the spring 13 is trying to increase the flow resistance of the bleeds 15, 16 and the pressure working between the dynamic unit 8 and the valve seat 6 is trying to open the dynamic unit, i. e. to decrease the throttling resistance of bleeds 15, 16. The dynamic unit 8 is fully open when the throttling resistance between the valve element 7 and the valve seat 6 is at an maximum and the pressure working between the dynamic unit 8 and the valve seat 6 is in principle only used for "indicating" when the dynamic unit 8 should start operating.

When the valve element 7 has the largest distance to the valve seat 6 the pressure between the valve seat 6 and the dynamic unit 8 can be regarded as negligible and this starts the dynamic unit 8 and the regulation or flow limitation is now only a "fight" between the inlet pressure and the spring 13.

## Claims

1. Valve (1), in particular heat exchanger valve, comprising a housing (2) having a first port (3), a second port (4), and a flow path between said first port (3) and said second port (4), wherein a valve element (7), a valve seat (6) having an axis (23), and a dynamic unit (8) are arranged in said flow path, **characterized in that** said dynamic unit (8) comprises at least a first bleed (15) having a variable first throttling resistance and a second bleed (16) having a variable second throttling resistance, said first bleed (15) and said second bleed (16) being arranged in series.

2. Valve according to claim 1, **characterized in that** said first bleed (15) is formed by a first member (10) and a second member (11), said first member (10) and said second member (11) being movable relatively to each other to change a throttling resistance of said first bleed (15), wherein said second bleed (16) is formed by said first member (10) and said second member (11).

3. Valve according to claim 2, **characterized in that** said first member (10) is a first tubular member and said second member (11) is a second tubular member, wherein one of said first member (10) and said second member (11) is at least partly inserted into the other one of said first member (10) and said second member (11) to form an inner member and an outer member.

4. Valve according to claim 3, **characterized in that** a throttling resistance of said first bleed (15) and a throttling resistance of said second bleed (16) are changed by moving said first member (10) and said second member (11) relatively to each other parallel to said axis (23).

5. Valve according to claim 4, **characterized in that** said first bleed (15) has a flow path direction from an outside to a chamber (26) surrounded by said first member (10) and said second member (11) and said second bleed (16) has a flow path direction from said chamber (26) to said outside.

6. Valve according to claim 4 or 5, **characterized in that** said first bleed (15) is formed by a first control edge (17) of a first circumferential wall (18) of said outer member and a first opening (19) in a second circumferential wall (20) of said inner member.

7. Valve according to claim 6, **characterized in that** said second bleed (16) is formed by a second opening (21) in said first circumferential wall (18) and a second control (22) edge of said inner member.

8. Valve according to claim 6 or 7, **characterized in that** said second opening (21) has a width in circumferential direction changing along said axis (23).

9. Valve according to any of claims 2 to 8, **characterized in that** spring means act on said first member (10) and/or said second member (11) in a direction in which said first throttling resistance and said second throttling resistance is decreased.

10. Valve according to claim 9, **characterized in that** said spring means comprises a first spring (12) acting on one side of said second member (11) and a second spring (13) acting on a second side of said second member (11) opposite said first side.

11. Valve according to claim 9 or 10, **characterized in that** said spring means comprises a tension spring.

12. Valve according to any of claims 2 to 11, **characterized in that** a presetting of said first bleed (15) and/or of said second bleed (16) is adjustable by rotating said first member (10) and said second member (11) relatively to each other.

13. Valve according to claim 12, **characterized in that** a presetting of said second bleed (16) is kept unchanged when said presetting of said first bleed (15) is adjusted.

14. Valve according to claim 12, **characterized in that** said first member (10) comprises an outer thread (24) and said housing (2) comprises an inner thread (25), wherein said inner thread (25) is in engagement with said outer thread (24).

15. Valve according to any of claims 1 to 14, **characterized in that** said bleeds (15, 16) are arranged in series in a direction parallel to said axis (23).
